# FASCICULE DE BREVET EUROPEEN

(11) **EP 2 394 326 B1**
(45) Date de publication et mention de la délivrance du brevet: **14.08.2013**
(21) Numéro de dépôt: 10707079.9
(22) Date de dépôt: 09.02.2010
(51) Int. Cl.: H01M 10/42, H01M 10/44, H01M 10/50, B60L 11/18, H01M 10/48

(54) **PROCÉDÉ DE GESTION THERMIQUE D'UNE BATTERIE ÉLECTRIQUE**
VERFAHREN ZUR HANDHABUNG DER WÄRME IN EINER ELEKTRISCHEN BATTERIE
METHOD FOR MANAGING THE HEAT IN AN ELECTRIC BATTERY

(30) Priorité: 09.02.2009 FR 0900565
(43) Date de publication de la demande: 14.12.2011
(73) Titulaire: Dow Kokam France SAS, 91300 Massy (FR)
(72) Inventeur: GABEN, Fabien, F-69130 Ecully (FR); DOUARRE, Alain, F-91190 Gif sur Yvette (FR)
(74) Mandataire: Sayettat, Julien Christian
(86) Numéro de dépôt international: PCT/FR2010/000096
(87) Numéro de publication internationale: WO 2010/089483

(56) Documents cités:
- EP-A- 1 876 051
- EP-A- 1 906 483
- JP-A- 9 019 074
- JP-A- 2004 281 077

## Description

L'invention concerne un procédé de gestion thermique d'une batterie électrique qui est notamment destinée à la traction d'un véhicule automobile électrique ou hybride c'est-à-dire comprenant un moteur électrique d'entraînement des roues motrices combiné avec un moteur thermique d'entraînement de ces roues ou éventuellement d'autres roues motrices.

En particulier, l'invention s'applique pour un haut degré d'hybridation des véhicules thermiques qui peut aller jusqu'à une électrification complète de la chaîne de traction. Dans ce cas, les batteries ne servent plus uniquement à assister les véhicules dans des phases d'accélération mais également à assurer le déplacement du véhicule de manière autonome sur des distances plus ou moins importantes.

La batterie électrique peut également trouver son application dans d'autres domaines techniques, par exemple pour le stockage d'énergie électrique dans d'autres modes de transport, notamment en aéronautique. Par ailleurs, dans des applications stationnaires telles que pour des éoliennes, la gestion thermique d'une batterie selon l'invention peut également être utilisée de façon avantageuse.

Pour garantir les niveaux de puissance et/ou d'énergie requis pour les applications considérées, il est nécessaire de créer des batteries comprenant une pluralité d'éléments générateurs d'énergie électrique pouvant être montés en série.

Les éléments générateurs comprennent classiquement au moins une cellule électrochimique, par exemple de type Lithium - ion ou Lithium - polymère, qui est formée d'un empilement de couches électro actives agissant successivement comme cathodes et anodes, lesdites couches étant mises en contact par l'intermédiaire d'un électrolyte.

Toutefois, lorsque ces éléments sont chargés et déchargés, il en résulte une production de chaleur qui, lorsqu'elle n'est pas contrôlée, peut avoir pour effet de diminuer la durée de vie des éléments, voire de donner lieu dans des conditions extrêmes, à des risques d'emballement thermique pour certaines compositions chimiques de cellules, conduisant à la détérioration de la batterie.

Ainsi, pour optimiser la sécurité, les performances et la durée de vie des batteries, des systèmes de conditionnement thermique des éléments sont intégrés dans les batteries de sorte à maintenir la température de ladite batterie dans une plage de température optimale.

En outre, dans l'application automobile envisagée, l'efficacité de ces systèmes doit être importante puisque les pics de dissipation thermique sont fonction des densités de courant et de leurs variations qui peuvent atteindre des valeurs très élevées, notamment lors des phases de fortes accélérations, de freinages régénératifs, de recharges rapides de la batterie ou de fonctionnement autoroutier en mode électrique. Par ailleurs, les batteries de forte énergie, qui utilisent des éléments épais dont le rapport entre les surfaces d'échange et le volume produisant la chaleur est réduit, doivent de ce fait être refroidies de façon particulièrement efficace.

En particulier, les systèmes de conditionnement thermique peuvent comprendre une chambre formée essentiellement autour des éléments générateurs, dans laquelle circule un fluide d'échange thermique avec lesdits éléments. En outre, pour assurer le conditionnement thermique, les systèmes connus comprennent un dispositif de réchauffement et/ou un dispositif de refroidissement du fluide en circulation. Ainsi, en conditionnant thermiquement le fluide et en faisant circuler un flux continu dudit fluide autour des éléments, le conditionnement thermique de la batterie peut être réalisé.

Toutefois, cette stratégie de gestion thermique conduit à l'apparition d'un gradient thermique au sein des éléments, dont l'amplitude est importante dans les batteries de forte énergie puisqu'elle dépend en autre :
- de la différence de températures entre le fluide et les éléments ;
- de l'épaisseur des éléments ;
- des propriétés de conduction thermique entre le coeur des éléments et le fluide ;
- de la puissance thermique dégagée par les éléments en utilisation.

Or, lorsqu'il devient trop important, ce gradient de température provoque un déséquilibre thermique des éléments qui induit un risque pour la sécurité et la durée de vie de la batterie. En effet, les capacités et résistances internes locales au sein des éléments dépendent de la température locale de ceux-ci. L'électrochimie des éléments peut donc être sollicitée de manière différente, une sur-sollicitation locale pouvant conduire à une accélération des phénomènes de vieillissement.

En outre, le conditionnement thermique de la batterie consomme une partie importante de l'énergie électrique embarquée dans le véhicule. Ce surcroit de consommation énergétique induit une perte d'autonomie des véhicules électriques. Pour conserver l'autonomie visée par l'application, il peut être nécessaire de compenser ce surcroit de consommation par un surdimensionnement de la batterie, ce qui n'est pas rentable d'un point de vue purement économique.

Par ailleurs, les éléments de batterie Li-ion de forte densité énergétique présentent des résistances internes qui sont très sensibles à la température. Cette particularité fait que si l'on souhaite préserver l'autonomie et la performance des batteries pour véhicules électriques par temps froid, il devient nécessaire de les réchauffer au moyen du système de conditionnement thermique. Ce réchauffement peut également être une source de consommation d'énergie dans les phases de roulage.

Enfin, l'augmentation de la taille des éléments pour obtenir une batterie de forte densité énergétique peut être vue comme une mise en parallèle de plusieurs empilements électro actifs élémentaires. En cas de forts appels de courant, le courant prenant préférentiellement le chemin le moins résistif, l'équilibrage des résistances entre chaque branche élémentaire mise en parallèle devient primordial.

Ces différences de résistances internes peuvent induire une sur-concentration locale en courant qui provoque une chute de potentiel au sein d'un élément. Cette chute ne pouvant pas être détectée par une mesure de la tension globale de l'élément, il en résulte un risque de franchir localement un seuil de tension « dangereux » pour l'électrochimie dudit élément. Le document EP 1906 483 A1 décrit un système de gestion thermique d'une batterie électrique.

L'invention vise à résoudre les problèmes de l'art antérieur en proposant notamment un procédé de gestion thermique d'une batterie qui permet de limiter la consommation électrique nécessaire à son conditionnement thermique tout en assurant une excellente homogénéité thermique au sein de ladite batterie, de sorte à accroître son autonomie, sa durée de vie ainsi que sa sécurité de fonctionnement.

A cet effet, l'invention propose un procédé de gestion thermique d'une batterie électrique comprenant une pluralité d'éléments générateurs d'énergie électrique, ledit procédé prévoyant d'utiliser un système de conditionnement thermique comprenant une chambre contenant un fluide d'échange thermique avec lesdits éléments, ledit système comprenant en outre un dispositif de mise en circulation dudit fluide dans ladite chambre et au moins un dispositif de conditionnement thermique dudit fluide, ledit procédé prévoyant, lors de la recharge de la batterie sur une source électrique externe, de pré-conditionner ladite batterie à une température moyenne T₀ et, lors de l'utilisation de ladite batterie, de déterminer :
- la différence ΔT₁ entre les températures de l'élément le plus chaud et de l'élément le plus froid ;
- la valeur absolue ΔT₂ de la différence entre la température T₀ et la température moyenne T de ladite batterie ;
   ledit procédé prévoyant :
- lorsque la différence ΔT₁ est inférieure à une première consigne C₁, de désactiver le dispositif de mise en circulation ainsi que le ou les dispositif(s) de conditionnement thermique ;
- lorsque la différence ΔT₁ est supérieure à la première consigne C₁ ou lorsque la différence ΔT₂ est supérieure à une deuxième consigne C₂, d'activer le dispositif de mise en circulation du fluide en :
   - maintenant désactivé(s) le ou les dispositif(s) de conditionnement thermique si la différence ΔT₂ est inférieure à la deuxième consigne C₂ ;
   - activant au moins un dispositif de conditionnement thermique si la différence ΔT₂ est supérieure à la deuxième consigne C₂.

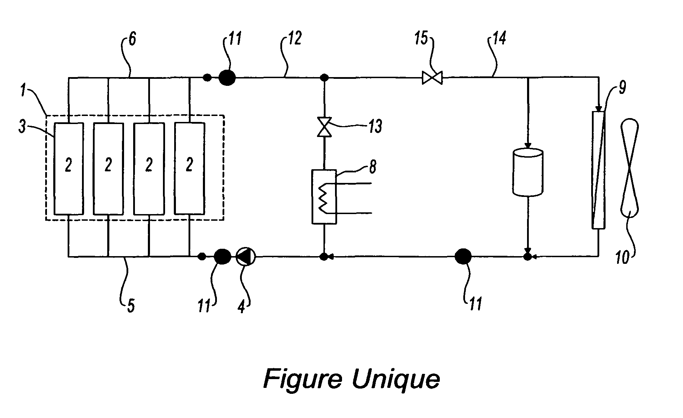

D'autres particularités et avantages de l'invention apparaîtront dans la description qui suit, faite en référence à la figure jointe qui représente une architecture pour la mise en oeuvre d'un procédé de gestion thermique d'une batterie électrique selon un mode de réalisation de l'invention.

Le procédé permet la gestion thermique d'une batterie électrique 1, ladite gestion s'entendant tant en apport qu'en retrait de calories de sorte à maintenir la batterie 1 dans une plage de fonctionnement en température qui est optimale. En particulier, le procédé permet d'assurer rapidement et efficacement un apport ou un retrait de calories dans la batterie 1, de sorte à assurer la régulation thermique quelles que soient les conditions d'utilisation.

La batterie 1 comprend une pluralité d'éléments 2 générateurs d'énergie électrique. En particulier, les éléments 2 comprennent au moins une cellule électrochimique, par exemple de type Lithium - ion ou Lithium - polymère.

Chaque cellule est formée d'un empilement de couches électro actives agissant successivement comme cathodes et anodes, lesdites couches étant mises en contact par l'intermédiaire d'un électrolyte. Les couches peuvent être conditionnées dans une enveloppe souple. En variante, elles peuvent être conditionnées dans un container rigide.

Dans un exemple de réalisation, les éléments 2 sont formés chacun avec deux cellules électrochimiques montées électriquement en parallèle. En outre, la batterie 1 comprend une pluralité de modules qui sont formés de plusieurs éléments 2 montés électriquement en série, lesdits modules étant également montés électriquement en série.

Le procédé prévoit d'utiliser un système de conditionnement thermique comprenant une chambre contenant un fluide d'échange thermique avec les éléments 2, ladite chambre s'étendant essentiellement autour desdits éléments pour assurer l'échange thermique au niveau de leur paroi. Le fluide peut être un gaz, notamment de l'air, ou un liquide, notamment un liquide diélectrique à faible tension de vapeur ou de l'eau éventuellement glycolée.

En relation avec la figure, la chambre comprend des enveloppes 3 qui sont formées chacune autour d'un élément 2, lesdites enveloppes étant alimentées en fluide par un circuit fermé. En outre, le système de conditionnement comprend un dispositif de mise en circulation du fluide dans la chambre qui, sur la figure, est formé d'une pompe 4. Plus précisément, le circuit présente une partie amont 5 et une partie aval 6 entre lesquelles le fluide peut circuler au travers des enveloppes 3, ledit circuit comprenant également un vase d'expansion 7.

En particulier, les enveloppes 3 permettent d'assurer un conditionnement thermique en parallèle de chacun des éléments 2, c'est-à-dire que le fluide parcourant une enveloppe 3 est issu directement de la partie amont 5, sans avoir préalablement parcouru une autre enveloppe 3. Il en résulte donc une excellente homogénéité thermique en évitant l'accumulation de chaleur liée à une succession d'échanges thermiques avec les éléments 2.

Pour assurer le conditionnement thermique, le système comprend également au moins un dispositif de conditionnement thermique dudit fluide. Le circuit représenté intègre un dispositif de réchauffement du fluide, par exemple sous la forme d'un thermoplongeur 8, ainsi qu'un dispositif de refroidissement du fluide. En particulier, le dispositif de refroidissement comprend un échangeur thermique 9 avec l'extérieur ou avec une boucle froide, notamment équipé d'un ventilateur 10.

En variante non représentée, les dispositifs de refroidissement et de réchauffement peuvent être intégrés dans un même échangeur, par exemple air-air, eau-eau ou air-eau, capable de refroidir ou de réchauffer le fluide en fonction du besoin.

Le procédé prévoit, lors de la recharge de la batterie 1 sur une source électrique externe, de pré-conditionner ladite batterie à une température moyenne T₀. En particulier, cette température de pré-conditionnement peut être prévue, notamment en fonction de la saison, pour assurer un fonctionnement optimal de la batterie 1, par exemple en étant établie entre 15 et 30 °C pour une électrochimie à base de Lithium. Ainsi, quelque soit la température ambiante notamment en fonction de la saison, le fonctionnement de la batterie 1 peut être optimisé dès le début de son utilisation.

En outre, ce pré-conditionnement permet de ne pas affecter l'autonomie de la batterie 1 puisque l'énergie nécessaire est consommée sur la source externe, notamment depuis le réseau électrique sur lequel la batterie 1 est branchée lors de sa recharge.

Par ailleurs, pendant le pré-conditionnement thermique de la batterie 1, le dispositif de circulation 4, seul ou respectivement en association avec l'un des dispositifs de conditionnement thermique 8, 9, peut être activé afin de maintenir ou, respectivement d'atteindre, la température T₀ de pré-conditionnement de façon homogène dans toute la batterie 1.

Lors de l'utilisation de la batterie 1, le procédé prévoit plusieurs étapes itératives qui sont réalisées avec une fréquence suffisante pour assurer un bon conditionnement thermique de la batterie 1 relativement à son autonomie, sa durée de vie ainsi que sa sécurité.

Le procédé prévoit la détermination de la valeur absolue ΔT₂ de la différence entre la température T₀ et la température moyenne T de la batterie 1. Pour déterminer la température moyenne de la batterie 1, le système de conditionnement peut comprendre plusieurs capteurs 11 de mesure de la température du fluide. Le mode de réalisation représenté prévoit des capteurs 11 de température respectivement en entrée de la partie amont 5, en sortie de la partie aval 6 et en aval du dispositif de refroidissement 9.

En outre, le procédé prévoit la détermination de la différence ΔT₁ entre ales températures de l'élément 2 le plus chaud et de l'élément 2 le plus froid. Pour ce faire, un capteur de température peut être prévu pour mesurer la température directement sur l'élément 2, notamment sur la connectique dudit élément. En variante, les différences de température ΔT₁ et/ou ΔT₂ peuvent être déterminées de façon indirecte au moyen d'un paramètre de fonctionnement de la batterie 1, notamment par analyse de l'intensité du courant qui est délivré par ladite batterie.

Ensuite, le procédé prévoit de commander spécifiquement le système de conditionnement en fonction des différences ΔT₁, ΔT₂ déterminées. Ainsi, lorsque la différence ΔT₁ est inférieure à une première consigne C₁, le procédé prévoit de désactiver le dispositif de mise en circulation 4 ainsi que les dispositifs de conditionnement thermique 8, 9. Typiquement, la première consigne C₁ peut être établie entre 2 et 5°C sans impact sur le bon fonctionnement de la batterie 1.

Ainsi, sur la base de l'inertie thermique de la batterie 1, notamment du fait de la grande quantité de fluide contenue dans la chambre, le conditionnement thermique est assuré sans consommer l'énergie électrique de ladite batterie. En outre, l'invention évite l'utilisation d'un flux continu de fluide conditionné thermiquement, de sorte à limiter la création d'un gradient thermique entre les parois et le coeur desdits éléments.

Toutefois, lorsque la différence ΔT₁ est supérieure à la première consigne C₁ ou lorsque la différence ΔT₂ est supérieure à une deuxième consigne C₂, le procédé prévoit d'activer le dispositif 4 de mise en circulation du fluide en :
- maintenant désactivés les dispositifs de conditionnement thermique 8, 9 si la différence ΔT₂ est inférieure à la deuxième consigne C₂ ;
- activant au moins un dispositif de conditionnement thermique 8, 9 si la différence ΔT₂ est supérieure à la deuxième consigne C₂.

En particulier, l'activation du dispositif de mise en circulation 4 et/ou l'activation du dispositif de conditionnement thermique 8, 9 peut correspondre à un fonctionnement desdits dispositifs selon une consigne prédéfinie, ou à un asservissement dudit fonctionnement en fonction des différences ΔT₁ et/ou ΔT₂.

Ainsi, le procédé permet d'économiser la consommation électrique des dispositifs de conditionnement 8, 9 lorsque la différence ΔT₂ est inférieure à la deuxième consigne C₂, et ce tout en assurant l'homogénéisation de la température entre les éléments 2. En outre, cette homogénéisation sans conditionnement thermique du fluide limite le gradient thermique entre ledit fluide et les éléments 2 ainsi qu'au sein des éléments 2 eux-mêmes.

Par ailleurs, si la différence ΔT₂ est supérieure à la deuxième consigne C₂, un dispositif de conditionnement 8, 9 est activé pour conditionner thermiquement le fluide. Par conséquent, la deuxième consigne C₂ est établie de sorte qu'aucun conditionnement thermique ne soit nécessaire tant que la différence ΔT₂ ne l'excède pas. Ainsi, la sécurité de la batterie 1 est garantie contre une température de fonctionnement trop importante ou trop basse, et ce uniquement lorsque ce scénario apparaît afin de limiter la consommation électrique nécessaire au conditionnement thermique.

En particulier, si la différence ΔT₂ est supérieure à la deuxième consigne C₂, le procédé prévoit l'activation du dispositif de réchauffement 8 - respectivement de refroidissement 9 - lorsque la température T est inférieure - respectivement supérieure - à la température T₀. Selon une réalisation, la deuxième consigne C₂ présente une première valeur C_{2c} au-delà de laquelle le dispositif de réchauffement 8 est activé et une deuxième valeur C_{2f} au-delà de laquelle le dispositif de refroidissement 9 est activé.

Dans le mode de réalisation représenté, la désactivation - respectivement l'activation - du dispositif de refroidissement 9 est réalisée par shuntage - respectivement alimentation - de la circulation du fluide dans l'échangeur 9.

Pour ce faire, le circuit présente une boucle primaire 12 équipée d'une première vanne 13, ladite boucle reliant la batterie 1 au dispositif de réchauffement 8, et une boucle secondaire 14 équipée d'une deuxième vanne 15, ladite boucle secondaire reliant ladite boucle primaire à l'échangeur 9. Ainsi, l'actionnement sélectif des vannes 13, 15 permet le shuntage ou l'alimentation de la circulation du fluide dans l'échangeur 9.

La valeur de la température T₀ de pré-conditionnement ainsi que les valeurs des première et deuxième consignes C₂, C₂, peuvent être établies par programmation dans l'algorithme de gestion thermique de la batterie 1, lesdites valeurs étant ajustées en fonction des caractéristiques de la batterie 1 et/ou de ses conditions climatiques d'utilisation.

Pour améliorer encore ia durée de vie de la batterie 1 et limiter la consommation électrique nécessaire à son conditionnement thermique, le procédé prévoit en outre que la deuxième consigne C₂ soit établie en fonction de l'état de charge SOC de la batterie 1.

En particulier, la loi d'établissement de la deuxième consigne C₂ est décroissante en fonction de l'état de charge SOC. En effet, les éléments sont d'autant moins sensibles au vieillissement thermique que leur état de charge est faible.

Selon une réalisation, la loi d'établissement peut s'écrire sous la forme :
C₂ = C₀ - a(SOC) - b(SOC)², SOC variant entre 0 et 1 en fonction de l'état de charge de la batterie 1, a et b étant des paramètres établis en fonction des caractéristiques de la batterie 1, C₀ étant une consigne maximale.

En particulier, la consigne maximale C₀ peut être égale ou de l'ordre de a + b. Ainsi, pour un SOC maximal, la deuxième consigne C₂ est proche de zéro, de sorte à préserver les éléments 2 contre tout vieillissement thermique lorsque leur charge est maximale. Par exemple, b peut être de l'ordre de deux fois a, notamment en utilisant a = 5 et b = 10.

## Revendications

1. Procédé de gestion thermique d'une batterie électrique (1) comprenant une pluralité d'éléments (2) générateurs d'énergie électrique, ledit procédé prévoyant d'utiliser un système de conditionnement thermique comprenant une chambre contenant un fluide d'échange thermique avec lesdits éléments, ledit système comprenant en outre un dispositif de mise en circulation (4) dudit fluide dans ladite chambre et au moins un dispositif de conditionnement thermique (8, 9) dudit fluide, ledit procédé prévoyant, lors de la recharge de la batterie (1) sur une source électrique externe, de pré-conditionner ladite batterie à une température moyenne T₀ et, lors de l'utilisation de ladite batterie, de déterminer :
- la différence ΔT₁ entre les températures de l'élément (2) le plus chaud et de l'élément (2) le plus froid ;
- la valeur absolue ΔT₂ de la différence entre la température T₀ et la température moyenne T de ladite batterie ;
ledit procédé prévoyant :
- lorsque la différence ΔT₁ est inférieure à une première consigne C₁, de désactiver le dispositif de mise en circulation (4) ainsi que le ou les dispositif(s) de conditionnement thermique (8, 9) ;
- lorsque la différence ΔT₁ est supérieure à la première consigne C₁ ou lorsque la différence ΔT₂ est supérieure à une deuxième consigne C₂, d'activer le dispositif de mise en circulation (4) du fluide en :
• maintenant désactivé(s) le ou les dispositif(s) de conditionnement thermique (8, 9) si la différence ΔT₂ est inférieure à la deuxième consigne C₂ ;
• activant au moins un dispositif de conditionnement thermique (8, 9) si la différence ΔT₂ est supérieure à la deuxième consigne C₂.

2. Procédé de gestion thermique selon la revendication 1, **caractérisé en ce que** le système de conditionnement comprend un dispositif (8) de réchauffement du fluide.

3. Procédé de gestion thermique selon la revendication 1 ou 2, **caractérisé en ce que** le système de conditionnement comprend un dispositif (9) de refroidissement du fluide.

4. Procédé de gestion thermique selon les revendications 2 et 3, **caractérisé en ce qu'**il prévoit, dans le cas où la différence ΔT₂ est supérieure à la deuxième consigne C₂, l'activation du dispositif de réchauffement (8) - respectivement de refroidissement (9) - lorsque la température T est inférieure - respectivement supérieure - à la température T₀.

5. Procédé de gestion thermique selon la revendication 4, **caractérisé en ce que** la deuxième consigne C₂ présente une première valeur C_{2c} au-delà de laquelle le dispositif de réchauffement (8) est activé et une deuxième valeur C_{2f} au-delà de laquelle le dispositif de refroidissement (9) est activé.

6. Procédé de gestion thermique selon l'une quelconque des revendications 3 à 5, **caractérisé en ce que** le dispositif de refroidissement comprend un échangeur thermique (9), la désactivation - respectivement l'activation - dudit dispositif étant réalisée par shuntage - respectivement alimentation - de la circulation du fluide dans ledit échangeur.

7. Procédé de gestion thermique selon l'une quelconque des revendications 1 à 6, **caractérisé en ce que** la température du fluide est mesurée pour déterminer la température moyenne T de la batterie (1).

8. Procédé de gestion thermique selon l'une quelconque des revendications 1 à 7, **caractérisé en ce que** la température T₀ de pré-conditionnement est établie entre 15 et 30°C.

9. Procédé de gestion thermique selon l'une quelconque des revendications 1 à 8, **caractérisé en ce que** la première consigne C₁ est établie entre 2 et 5°C.

10. Procédé de gestion thermique selon l'une quelconque des revendications 1 à 9, **caractérisé en ce que** la deuxième consigne C₂ est établie en fonction de l'état de charge SOC de la batterie (1).

11. Procédé de gestion thermique selon la revendication 10, **caractérisé en ce que** la loi d'établissement de la deuxième consigne C₂ est décroissante en fonction de l'état de charge SOC.

12. Procédé de gestion thermique selon la revendication 11, **caractérisé en ce que** la loi d'établissement s'écrit sous la forme :
C₂ = C₀ - a(SOC) - b(SOC)², SOC variant entre 0 et 1 en fonction de l'état de charge de la batterie (1), a et b étant des paramètres établies en fonction de caractéristiques de la batterie (1), C₀ étant une consigne maximale.

13. Procédé de gestion thermique selon la revendication 12, **caractérisé en ce que** la consigne maximale C₀ est égale ou de l'ordre de a + b.

14. Procédé de gestion thermique selon l'une quelconque des revendications 1 à 13, **caractérisé en ce que** le dispositif de circulation (4), seul ou en association avec un dispositif de conditionnement (8, 9), est activé pendant le pré-conditionnement thermique de la batterie (1).

15. Procédé de gestion thermique selon l'une quelconque des revendications 1 à 14, **caractérisé en ce que** le système de conditionnement est agencé pour assurer un conditionnement thermique en parallèle de chacun des éléments (2).

## Patentansprüche

1. Verfahren für ein Temperaturmanagement einer elektrischen Batterie (1) mit einer Vielzahl von Elementen (2) zum Generieren elektrischer Energie, wobei das besagte Verfahren die Verwendung eines thermischen Konditionierungssystems vorsieht, das eine Kammer mit einem Medium für den Wärmeaustausch mit den besagten Elementen enthält, und das besagte System darüber hinaus eine Vorrichtung zum Umwälzen (4) des besagten Mediums in der besagten Kammer, sowie eine Vorrichtung zur thermischen Konditionierung (8, 9) des besagten Mediums enthält, und das besagte Verfahren beim Aufladen der Batterie (1) an einer externen Stromquelle die Vorkonditionierung der besagten Batterie auf eine Durchschnittstemperatur von T₀ vorsieht, sowie, bei der Verwendung der besagten Batterie die Bestimmung:
- des Unterschieds ΔT₁ zwischen den Temperaturen des heißesten Elements (2) und des kältesten Elements (2);
- des Absolutwerts ΔT₂ des Unterschieds zwischen der Temperatur T₀ und der durchschnittlichen Temperatur T der besagten Batterie;
wobei das besagte Verfahren folgendes vorsieht:
- wenn der Unterschied ΔT₁ kleiner als ein erster Sollwert C₁ ist, die Deaktivierung der Umwälzvorrichtung (4) und der Vorrichtung(-en) zur thermischen Konditionierung (8, 9);
- wenn der Unterschied ΔT₁ größer als der erste Sollwert C₁ ist oder wenn der Unterschied ΔT₂ größer als ein zweiter Sollwert C₂ ist, die Aktivierung der Umwälzvorrichtung (4) für das Medium durch:
• das Beibehalten der Deaktivierung der Vorrichtung(-en) zur thermischen Konditionierung (8, 9), wenn der Unterschied ΔT₂ kleiner als der zweite Sollwert C₂ ist;
• das Aktivieren zumindest einer Vorrichtung zur thermischen Konditionierung (8, 9), wenn der Unterschied ΔT₂ größer als der zweite Sollwert C₂ ist.

2. Verfahren für ein Temperaturmanagement nach Anspruch 1, **dadurch gekennzeichnet, dass** das Konditionierungssystem eine Vorrichtung (8) zum Erhitzen des Mediums umfasst.

3. Verfahren für ein Temperaturmanagement nach Anspruch 1 oder 2, **dadurch gekennzeichnet, dass** das Konditionierungssystem eine Vorrichtung (9) zum Kühlen des Mediums umfasst.

4. Verfahren für ein Temperaturmanagement nach den Ansprüchen 2 und 3, **dadurch gekennzeichnet, dass** es für den Fall, dass der Unterschied ΔT₂ größer ist, als der zweite Sollwert C₂, die Aktivierung der Heizvorrichtung (8) - bzw. der Kühlvorrichtung (9) - vorsieht, falls die Temperatur T kleiner - bzw. größer - ist, als die Temperatur T₀.

5. Verfahren für ein Temperaturmanagement nach Anspruch 4, **dadurch gekennzeichnet, dass** der zweite Sollwert C₂ einen ersten Wert C_{2c} aufweist, über dem die Heizvorrichtung (8) aktiviert wird, und einen zweiten Wert C_{2f}, über dem die Kühlvorrichtung (9) aktiviert wird.

6. Verfahren für ein Temperaturmanagement nach irgendeinem der Ansprüche 3 bis 5, **dadurch gekennzeichnet, dass** die Kühlvorrichtung einen Wärmetauscher (9) umfasst, und die Deaktivierung - bzw. die Aktivierung - der besagten Vorrichtung durch das Überbrücken - bzw. die Versorgung - des Medienkreislaufs im besagten Tauscher erfolgt.

7. Verfahren für ein Temperaturmanagement nach irgendeinem der Ansprüche 1 bis 6, **dadurch gekennzeichnet, dass** die Medientemperatur gemessen wird, um die durchschnittliche Temperatur T der Batterie (1) zu bestimmen.

8. Verfahren für ein Temperaturmanagement nach irgendeinem der Ansprüche 1 bis 7, **dadurch gekennzeichnet, dass** die Vorkonditionierungstemperatur T₀ zwischen 15 und 30°C festgelegt wird.

9. Verfahren für ein Temperaturmanagement nach irgendeinem der Ansprüche 1 bis 8, **dadurch gekennzeichnet, dass** der erste Sollwert C₁ zwischen 2 und 5°C festgelegt wird.

10. Verfahren für ein Temperaturmanagement nach irgendeinem der Ansprüche 1 bis 9, **dadurch gekennzeichnet, dass** der zweite Sollwert C₂ in Abhängigkeit vom SOC Ladezustand der Batterie (1) festgelegt wird.

11. Verfahren für ein Temperaturmanagement nach Anspruch 10, **dadurch gekennzeichnet, dass** die Regel zur Festlegung des zweiten Sollwerts C₂ in Abhängigkeit vom SOC Ladezustand abnehmend ist.

12. Verfahren für ein Temperaturmanagement nach Anspruch 11, **dadurch gekennzeichnet, dass** sich die Regel zur Festlegung wie folgt darstellt:
C₂ = C₀ - a(SOC) - b(SOC)², wobei SOC je nach Ladezustand der Batterie (1) zwischen 0 und 1 variiert, a und b Parameter sind, die in Abhängigkeit von den Merkmalen der Batterie (1) erstellt werden, und C₀ einen maximalen Sollwert darstellt.

13. Verfahren für ein Temperaturmanagement nach Anspruch 12, **dadurch gekennzeichnet, dass** der maximale Sollwert C₀ gleich a + b ist, oder eine Größenordnung davon darstellt.

14. Verfahren für ein Temperaturmanagement nach irgendeinem der Ansprüche 1 bis 13, **dadurch gekennzeichnet, dass** die Umwälzvorrichtung (4) alleine oder in Verbindung mit der Konditionierungsvorrichtung (8, 9) während der thermischen Vorkonditionierung der Batterie (1) aktiviert wird.

15. Verfahren für ein Temperaturmanagement nach irgendeinem der Ansprüche 1 bis 14, **dadurch gekennzeichnet, dass** das Konditionierungssystem angeordnet ist, um eine parallele thermische Konditionierung jedes der Elemente (2) durchzuführen.

## Claims

1. Method for the thermal management of an electric battery (1) comprising a plurality of electrical energy generating elements (2), said method providing for the use of a thermal conditioning system comprising a chamber containing a fluid for heat exchange with said elements, said system furthermore comprising a device (4) for circulating said fluid in said chamber and at least one device (8, 9) for thermal conditioning of said fluid, said method making provision, when the battery (1) is recharged on an external electrical source, for preconditioning said battery at a mean temperature T₀ and, during the use of said battery, for determining:
- the difference ΔT₁ between the temperatures of the hottest element (2) and the coldest element (2);
- the absolute value ΔT₂ of the difference between the temperature T₀ and the mean temperature T of said battery; said method making provision:
- when the difference ΔT₁ is less than a first set value C₁, for deactivating the circulation device (4) as well as the thermal conditioning device or devices (8, 9);
- when the difference ΔT₁ is greater than the first set value C₁ or when the difference ΔT₂ is greater than its second set value C₂, activating the fluid-circulation device (4) by:
• keeping the thermal conditioning device or devices (8, 9) deactivated if the difference ΔT₂ is less than the second set value C₂;
• activating at least one thermal conditioning device (8, 9) if the difference ΔT₂ is greater than the second set value C₂.

2. Thermal management method according to claim 1, **characterised in that** the conditioning system comprises a device (8) for heating the fluid.

3. Thermal management method according to claim 1 or 2, **characterised in that** the conditioning system comprises a device (9) for cooling the fluid.

4. Thermal management method according to claims 2 and 3, **characterised in that** it provides, in the case when the difference ΔT₂ is greater than the second set value C₂, the activation of the heating (8) - or respectively cooling (9) - device when the temperature T is less than - or respectively greater than - the temperature T₀.

5. Thermal management method according to claim 4, **characterised in that** the second set value C₂ has a first value C_{2c} beyond which the heating device (8) is activated and a second value C_{2f} beyond which the cooling device (9) is activated.

6. Thermal management method according to any one of claims 3 to 5, **characterised in that** the cooling device comprises a heat exchanger (9), the deactivation - or respectively the activation - of said device being effected by shunting - or respectively supplying - the circulation of the fluid in said exchanger.

7. Thermal management method according to any one of claims 1 to 6, **characterised in that** the temperature of the fluid is measured in order to determine the mean temperature T of the battery (1).

8. Thermal management method according to any one of claims 1 to 7, **characterised in that** the preconditioning temperature T₀ is established between 15° and 30°C.

9. Thermal management method according to any one of claims 1 to 8, **characterised in that** the first set value C₁ is established between 2° and 5°C.

10. Thermal management method according to any one of claims 1 to 9, **characterised in that** the second set value C₂ is established according to the state of charge SOC of the battery (1).

11. Thermal management method according to claim 10, **characterised in that** the law for establishing the second set value C₂ is decreasing as a function of the state of charge SOC.

12. Thermal management method according to claim 11, **characterised in that** the establishment law is written in the form:
C₂ = C₀ - a(SOC) - b(SOC)², SOC varying between 0 and 1 according to the state of charge of the battery (1), a and b being parameters established according to the characteristics of the battery (1), C₀ being a maximum set value.

13. Thermal management method according to claim 12, **characterised in that** the maximum set value C₀ is equal to or approximately a + b.

14. Thermal management method according to any one of claims 1 to 13, **characterised in that** the circulation device (4) alone or in association with a conditioning device (8, 9) is activated during the thermal preconditioning of the battery (1).

15. Thermal management method according to any one of claims 1 to 14, **characterised in that** the conditioning system is arranged to provide thermal conditioning in parallel of each of the elements (2).
